# EUROPÄISCHE PATENTANMELDUNG

(11) **EP 2 347 952 A2**
(43) Veröffentlichungstag der Anmeldung: **27.07.2011**
(21) Anmeldenummer: 10011390.1
(22) Anmeldetag: 29.09.2010
(51) Int. Cl.: B63B 17/00

(54) **Verfahren zur Erfassung von Kavitation**

(30) Priorität: 20.01.2010 DE 102010005050
(71) Anmelder: Howaldtswerke-Deutsche Werft GmbH, 24143 Kiel (DE)
(72) Erfinder: Genz, Ralph, 24217 Schönberg (DE)
(74) Vertreter: Vollmann, Heiko

(57) **Zusammenfassung**

Bei dem Verfahren zur Erfassung von Kavitationen wird die Kavitation durch Ermittlung zumindest einer elektromagnetischen oder elektrischen Größe (B, U, I) erfasst.

## Beschreibung

Die Erfindung betrifft ein Verfahren zur Erfassung von Kavitation.

Bekanntermaßen treten bei der schnellen Förderung von Flüssigkeiten bzw. bei der schnellen Bewegung von Objekten durch Flüssigkeiten hindurch regelmäßig Druckschwankungen auf, die zur Kavitation führen können. Dies ist insbesondere bei Flügelrädern, beispielsweise Schiffspropellern oder Pumpenimpellern relevant, da Kavitationsfraß die Flügelräder beschädigen oder sogar zerstören kann. Bei Unterseebooten führt darüber hinaus Kavitation zu einer hohen Geräuschentwicklung, die nachteilig die Ortbarkeit des Unterseebootes vergrößert.

Aus diesen Gründen werden insbesondere Flügelräder regelmäßig auf das Auftreten von Kavitation getestet. Dazu ist es bekannt, visuelle Prüfungen vorzunehmen. Beispielsweise wird die Bildung von Kavitationsblasen durch eine Gruppe von Testpersonen beobachtet. Solche Prüfungen beruhen jedoch auf subjektiven Einschätzungen, die nur schwierig quantifizierbar und standardisierbar sind. Ferner werden akustische Messungen zur Erfassung von Kavitation vorgenommen, beispielsweise zur Prüfung von Bootspropellern. Auch akustische Messungen gestalten sich häufig schwierig, so treten beispielsweise bei derart hohen Drehzahlen, bei denen Kavitation einsetzen kann, starke, beispielsweise durch Strömung bedingte, Störgeräusche auf, die eine akustische Erfassung von Kavitation erschweren.

Es ist daher Aufgabe der Erfindung, ein verbessertes Verfahren zur Erfassung von Kavitation bereitzustellen.

Diese Aufgabe wird durch ein Verfahren mit den im Anspruch 1 angegebenen Merkmalen gelöst. Bevorzugte Weiterbildungen der Erfindung ergeben sich aus den Unteransprüchen, der nachfolgenden Beschreibung sowie der Zeichnung.

Bei dem erfindungsgemäßen Verfahren zur Erfassung von Kavitation wird die Kavitation durch Ermittlung zumindest einer elektromagnetischen oder elektrischen Größe erfasst. Damit steht neben der akustischen und visuellen Erfassung von Kavitation ein neues Verfahren zur Verfügung. Mit diesem Verfahren kann Kavitation zuverlässig erkannt werden. Beispielsweise kann die elektromagnetische oder elektrische Größe automatisch mittels entsprechend ausgebildeter Sensoren erfasst werden. Ferner kann die Erfassung von Kavitation so leicht standardisiert werden.

Die Erfassung von Kavitation durch Erfassung einer elektromagnetischen oder elektrischen Größe setzt allerdings voraus, dass ein elektrischer Strom fließt, wie dies bei Schiffen regelmäßig der Fall ist, insbesondere bei Unterseebooten, aber auch bei anderen Maschinen gegebenenfalls erzeugt werden kann. Bei Schiffen, insbesondere Unterseebooten fließt typischerweise ein Strom, welcher durch den Potenzialunterschied zwischen Propeller und der regelmäßig vorhandenen Opferanode am Schiff bedingt ist. Bei Schiffen fließt also aufgrund des Potenzialunterschieds typischerweise ein Strom zwischen dem Propeller, der damit verbundenen Antriebswelle über die Lager- und Schiffskörper zur Opferanode, dieser Stromkreis wird durch das verbindende Seewasser geschlossen. Die Bauteile müssen daher elektrisch leitend sein oder zu diesem Zweck elektrisch leitend ausgebildet werden.

Bevorzugt wird bei dem erfindungsgemäßen Verfahren die an einem Flügelrad auftretende Kavitation erfasst. Gerade die Kavitation an Flügelrädern ist im Betrieb häufig problematisch sowie mit den bislang bekannten Verfahren schwierig zu erfassen. Besonders bei Flügelrädern erhöht das erfindungsgemäße Verfahren die Zuverlässigkeit bei der Erfassung von Kavitation.

Bevorzugt wird bei dem Verfahren die Kavitation eines typischerweise aus Metall bestehenden Propellers, insbesondere eines Unterseebootpropellers, erfasst. Beispielsweise wird das Verfahren in der Entwicklung, Qualitätssicherung oder im Schiffsbau bei der Endabnahme bzw. bei der Fertigung von Propellern eingesetzt.

In einer alternativen Weiterbildung der Erfindung wird die Kavitation eines Impellers, insbesondere einer Pumpe, erfasst. Bevorzugt wird dabei die Kavitation innerhalb eines den Impeller umgebenen Gehäuses erfasst. Auf diese Weise ist sichergestellt, dass das Gehäuse die zu erfassende elektromagnetische Größe, beispielsweise eine Feldstärke des elektromagnetischen Feldes, nicht abschirmt. Alternativ kann eine elektrische Größe (Strom oder Spannung) in dem erzeugten Stromkreislauf gemessen werden, z. B. der Potentialunterschied / die Spannung zwischen Welle und Gehäuse. Das Verfahren kann beispielsweise in der Entwicklung von Impellern oder in der Qualitätssicherung bei der Fertigung eingesetzt werden.

Vorteilhafterweise wird bei dem Verfahren die Kavitation stationär zur Drehachse des rotierenden Flügelrades und/oder ortsfest erfasst. Z.B. wird die Kavitation eines Schiffs- oder eines Unterseebootspropellers ortsfest zu einer Teststrecke, die das Schiff bzw. Unterseeboot befährt, erfasst. Die Kavitation kann etwa mittels ortsfest auf dem Grund einer Flachwasserteststrecke angeordneten Sensoren erfasst werden. Die elektrische Größe Spannung kann mittels Sensoren z. B. zwischen Antriebswelle und Schiffskörper gemessen werden, die elektrische Größe Strom kann mittels geeignet angeordneter Sensoren z. B. über einen isolierten Bereich in der Antriebswelle gemessen werden.

In einer bevorzugten Weiterbildung der Erfindung ist die elektromagnetische Größe eine Feldstärke des elektromagnetischen Feldes und/oder ihr zeitlicher Verlauf. Idealerweise ist die erfasste Feldstärke eine magnetische Feldstärke, insbesondere die magnetische Induktion. Alternativ oder zusätzlich wird die elektrische Feldstärke erfasst. Alternativ oder zusätzlich wird die elektrische Feldstärke erfasst. Alternativ oder zusätzlich werden die elektrischen Größen Spannung oder Strom in dem betreffenden Stromkreislauf erfasst.

Zweckmäßigerweise wird bei dem erfindungsgemäßen Verfahren das Vorliegen eines kavitationsabhängigen Anteils der ermittelten elektromagnetischen und/oder elektrischen Größe geprüft. Beispielsweise ändert sich die elektromagnetische Größe bei Einsetzen der Kavitation um einen gewissen Wert, welcher den kavitationsabhängigen Anteil bildet.

Bevorzugt bildet bei dem Verfahren der kavitationsabhängige Anteil zumindest einen Frequenzanteil der elektromagnetischen und/oder elektrischen Größe. Beispielsweise ist der kavitationsabhängige Anteil eine Oszillation bzw. eine Oberwelle der kontinuierlich über die Zeit erfassten elektromagnetischen und/oder elektrischen Größe. Z.B. zeigt sich der Frequenzanteil als zusätzlicher oder in der Stärke geänderter Frequenzanteil, beispielsweise in Form eines oder mehrerer zusätzlicher oder in der Stärke geänderter Peaks bzw. Spektrallinien, im Frequenzspektrum der elektromagnetischen und/oder elektrischen Größe.

Im Falle der Erfassung der Kavitation eines Flügelrades liegt der kavitationsabhängige Frequenzanteil beispielsweise bei der Umlauffrequenz des Flügelrades oder einem ganzzahligen Vielfachen dieser Frequenz vor. So kann ein kavitationsabhängiger Frequenzanteil (bzw. dessen Stärke) bei der Umlauffrequenz des Flügelrades auf das Einsetzen der Kavitation an zumindest einem Flügelblatt des Flügelrades hinweisen. Tritt Kavitation auch an zusätzlichen Flügelblättern des Flügelrades auf, so kann z.B. je Flügelblatt ein zusätzlicher kavitationsabhängiger Frequenzanteil bei einem entsprechenden ganzzahligen Vielfachen der Umlauffrequenz des Flügelrades vorliegen, beispielsweise bei der doppelten Umlauffrequenz im Falle eines zweiten kavitierenden Flügelblattes. Aus dem spektralen Profil des kavitationsabhängigen Frequenzanteils, beispielsweise der Anzahl oder der relativen Stärke kavitationsabhängiger Spektrallinien, kann dann die Anzahl der kavitierenden Flügelblätter ermittelt werden.

Zweckmäßigerweise wird bei dem Verfahren ein niederfrequenter Anteil der erfassten elektromagnetischen und/oder elektrischen Größe vor der Prüfung des Vorliegens des kavitationsabhängigen Anteils ausgefiltert, insbesondere sofern das Vorliegen eines kavitationsabhängigen Frequenzanteils geprüft werden soll. Geeigneterweise wird durch die Filterung ein kavitationsunabhängiger Anteil der elektromagnetischen und/oder elektrischen Größe herausgefiltert. Vorteilhaft kann so der Signalkontrast des kavitationsabhängigen Frequenzanteils, etwa bei einer Auswertung der elektromagnetischen und/oder elektrischen Größe im Zeitbereich, verstärkt werden.

Bevorzugt wird bei dem erfindungsgemäßen Verfahren für den kavitationsabhängigen Anteil ein Schwellwert ermittelt oder ein Schwellverhältnis bezogen auf einen solchen Anteil der elektromagnetischen und/oder elektrischen Größe, der zumindest einen kavitationsunabhängigen Anteil umfasst, gebildet. So kann die Prüfung des Vorliegens des kavitationsabhängigen Anteils als Vergleich der, ggf. wie vorstehend gefilterten, elektromagnetischen und/oder elektrischen Größe mit der Schwellhöhe bzw. dem Schwellverhältnis erfolgen. Zweckmäßigerweise werden in dem Verfahren als elektromagnetische Größe die elektromagnetischen Felder in einem Messbereich erfasst, welcher zur Vermessung der elektromagnetischen Signatur von Unterseebooten bzw. von Propellern von Unterseebooten Verwendung findet. Geeigneterweise wird die Messung im Abstand weniger Meter von der möglichen Kavitation bzw. von einem auf Kavitation zu prüfenden Bauteil durchgeführt. Beispielsweise wird die Kavitation eines Unterseebootpropellers mittels Messeinrichtungen und/oder mittels Messverfahren erfasst, welche zur Vermessung der magnetischen Signaturen von Unterseebooten zum Einsatz kommen.

Nachfolgend ist die Erfindung anhand eines in der Zeichnung dargestellten Ausführungsbeispiels näher erläutert. Es zeigen:
- Fig. 1: Eine zeitabhängige Messung des Magnetfeldes stationär zum Meeresboden während der Vorbeifahrt eines Unterseebootes,
- Fig. 2: eine Messung gemäß Fig. 1, wobei der Propeller des Unterseebootes kavitiert,
- Fig. 3: das Frequenzspektrum des erfassten Magnetfeldes gemäß Fig. 1 und
- Fig. 4: das Frequenzspektrum des erfassten Magnetfeldes gemäß Fig. 2.

In dem nachfolgend beschriebenen Ausführungsbeispiel wird die Kavitation eines Propellers eines Unterseebootes über eine Magnetfeldmessung erfasst. Dazu sind Magnetfeldsensoren, welche zur Messung von Magnetfeldstärken etwa im Bereich magnetischer Signaturen von Unterseebooten in Abhängigkeit von der Zeit (*t*) ausgebildet sind, auf dem Grund einer Flachwasserteststrecke für ein Unterseeboot angeordnet. Die Magnetfeldsensoren befinden sich in ca. 5 bis 10 Metern Abstand von dem vorbeifahrenden Unterseeboot.

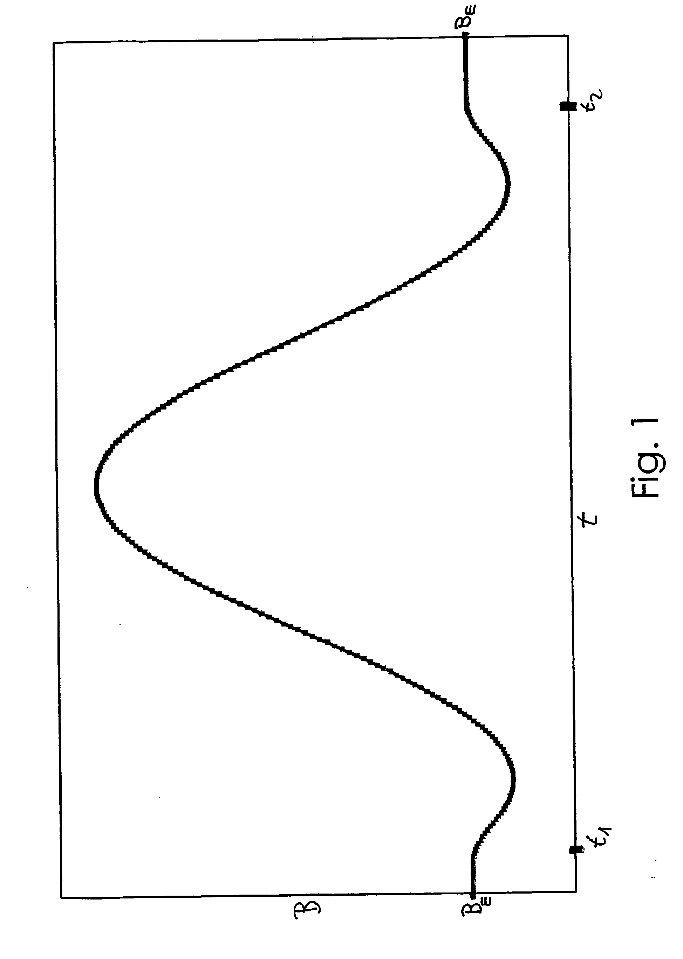

Mittels der Magnetfeldsensoren wird das Magnetfeld während der Vorbeifahrt des Unterseebootes gemessen. Im Falle ausbleibender Kavitation des Propellers ergibt sich eine Messkurve wie in Fig. 1 gezeigt. Die gemessene magnetische Induktion B entspricht sowohl vor als auch nach der Vorbeifahrt des Unterseebootes dem Erdmagnetfeld B*_{E}*. In der Darstellung in Fig. 1 passiert das Unterseeboot die Magnetfeldsensoren während der zwischen den Zeitpunkten *t₁* und *t₂* liegenden Zeitspanne. Das Vorbeifahren des Unterseebootes ist in dieser Zeitspanne durch eine Abweichung der magnetischen Induktion B vom Erdmagnetfeld *B_{E}* erkennbar. Die magnetische Induktion B ist dabei zwischen den Zeiten *t₁* und *t₂* im Wesentlichen erhöht. Die Messkurve verläuft dabei in der dargestellten Zeitauflösung nahezu glatt.

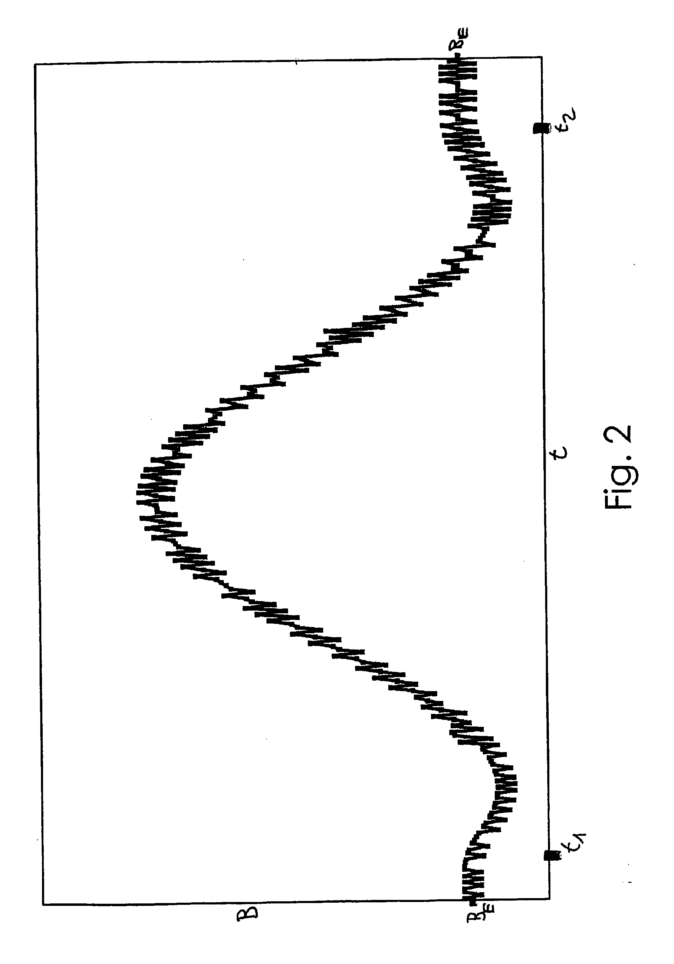

In Fig. 2 ist eine Messkurve im Falle eines kavitierenden Propellers des Unterseebootes gezeigt. Im Gegensatz zur glatten Messkurve in Fig. 1 weist die Messkurve gemäß Fig. 2 Oberwellen auf, welche die Messkurve erkennbar modulieren. Die Amplituden dieser Modulation infolge des kavitierenden Propellers sind dabei deutlich kleiner als die Abweichung der magnetischen Induktion B vom Erdmagnetfeld aufgrund des vorbeifahrenden Unterseebootes.

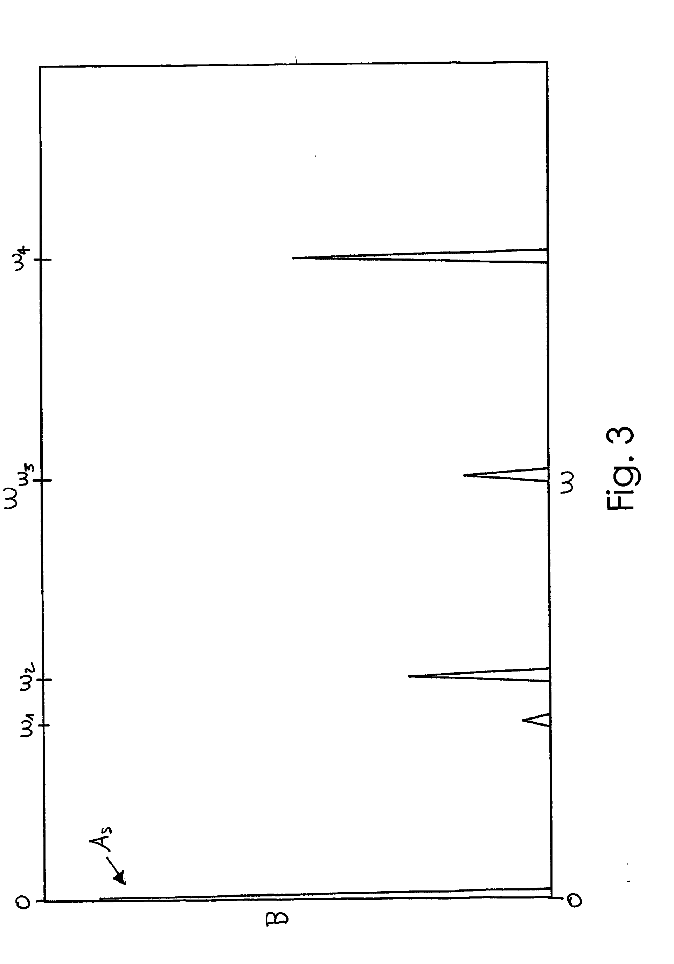

Diese Modulation aufgrund des kavitierenden Propellers bildet dabei einen kavitationsabhängigen Frequenzanteil der gemessenen magnetischen Induktion *B*. Zur Erläuterung werden nachfolgend die Frequenzspektren der oben beschriebenen zeitabhängigen Magnetfeldmessungen erläutert. Wie in Fig. 3 dargestellt weist das Frequenzspektrum - hier die Fouriertransformierte - der Messkurve gemäß Fig. 1, also bei ausbleibender Kavitation, einen Frequenzanteil Aₛ bei der Frequenz 0 H_{z} auf, der im Wesentlichen dem zeitlich konstanten Erdmagnetfeld *B_{E}* entspricht. Der Frequenzanteil *Aₛ* ist durch die Abweichung der magnetischen Induktion B vom Erdmagnetfeld *B_{E}* während der Vorbeifahrt des Unterseebootes zwischen den Zeiten *t₁* und *t₂* im Frequenzbereich verbreitert und bildet einen niederfrequenten Anteil *Aₛ* des Frequenzspektrums. Zusätzlich weist das Frequenzspektrum vier peak- bzw. linienförmige Frequenzanteile (im Folgenden auch Spektrallinien genannt) bei den Frequenzen ω*₁*, ω*₂*, ω*₃* und ω*₄* auf. Die Modulation der magnetischen Induktion aufgrund der Spektrallinien bei den Frequenzen ω*₁*, ω*₂*, ω*₃* und ω*₄* ist in Fig. 1 zeitlich nicht aufgelöst.

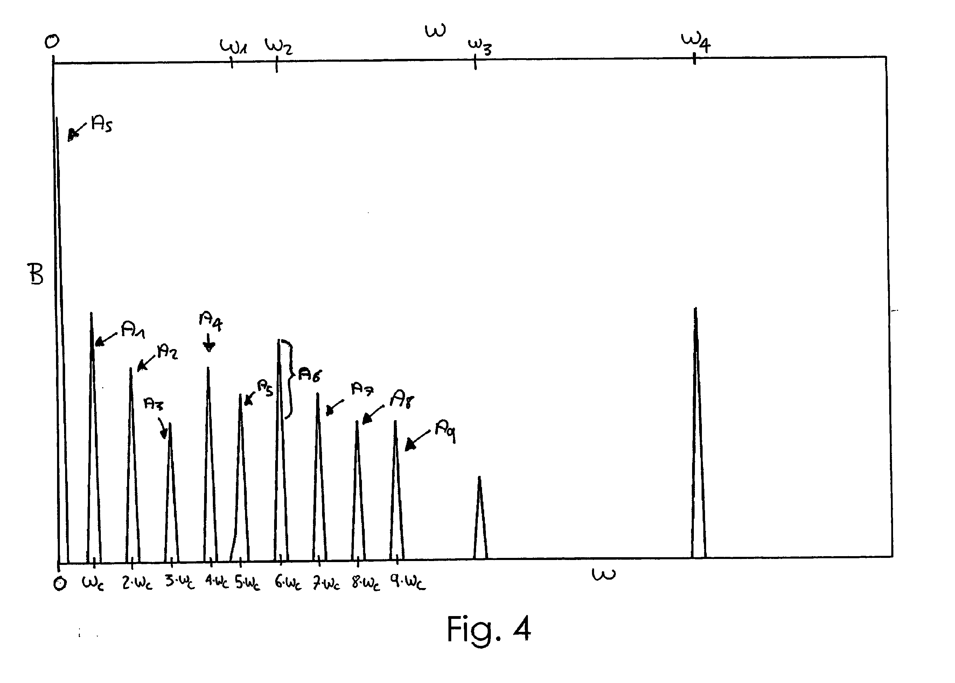

Bei Einsetzen der Kavitation des Propellers des Unterseebootes treten eine Vielzahl zusätzlicher Spektrallinien im Frequenzspektrum auf, wie am Frequenzspektrum (Fig. 4) zur Messkurve gem. Fig. 2 deutlich wird. Das Frequenzspektrum weist zum einen sämtliche Frequenzanteile auf, die auch bei ausbleibender Kavitation (Fig. 3) auftreten. Zusätzlich weist das Frequenzspektrum jedoch kavitationsabhängige Frequenzanteile in der Form von Spektrallinien *A₁*, *A₂*, ..., *A₉* bei der Umlauffrequenz ω*_{c}* des Propellers sowie bei ganzzahligen Vielfachen 2·ω*_{c}*, ..., 9·ω*_{c}* dieser Umlauffrequenz ω*_{c}* auf. Diese Spektrallinien *A₁*, *A₂*, ..., *A₉* entsprechen der kavitationsabhängigen Modulation der Messkurve gem. Fig. 2. Bei dem in Fig. 4 dargestellten Frequenzspektrum wird dabei die an sämtlichen Flügeln eines 5-flügeligen Propellers auftretende Kavitation erfasst. Dabei treten Oberwellen bis zur neunfachen Frequenz 9·ω*_{c}* des Propellerumlaufs ω*_{c}* auf.

Die Erfassung der Kavitation erfolgt durch Auswertung erfasster Frequenzspektren wie oben anhand von Fig. 3 und Fig. 4 beschreiben. Dabei wird das Verhältnis der Stärke der Spektrallinien *A₁, A₂*, ..., *A₉* bei der Umlauffrequenz ω*_{c}* des Propellers und bei ganzzahligen Vielfachen 2·ω*_{c}*, ..., 9·ω*_{c}* dieser Frequenz ωc zur Stärke des kavitationsunabhängigen Frequenzanteils As bestimmt. Bei Überschreiten eines vorbestimmten Schwellverhältnisses wird auf das Vorliegen von Kavitation geschlossen. Aus der relativen Stärke der Spektrallinien *A₁*, *A₂*, ..., *A₉* im Verhältnis zueinander wird auf die Anzahl der kavitierenden Flügelblätter des Propellers geschlossen.

Alternativ zum oben beschriebenen Ausführungsbeispiel wird in einem weiteren Ausführungsbeispiel (nicht gesondert dargestellt) anstelle der magnetischen Induktion das elektrische Feld, die elektrische Spannung oder der elektrische Strom über entsprechend ausgebildete Sensoren erfasst. Diese Ausführungsbeispiele können auch miteinander kombiniert sein.

### Bezugszeichenliste

- B: magnetische Induktion
- *B_{E}*: Erdmagnetfeld
- *t*: Zeit
- *t₁*: Zeitpunkt
- *t₂*: Zeitpunkt
- Aₛ: niederfrequenter Anteil
- *A₁*, *A₂,* ..., *A₉*: kavitationsabhängige Spektrallinien
- ω*₁*, ω*₂*, ω*₃*, ω*₄*: Frequenzen
- ω*_{c}*, 2·ω*_{c}*, ..., 9·ω*_{c}*: Frequenzen kavitationsabhängiger Spektrallinien

## Patentansprüche

1. Verfahren zur Erfassung von Kavitation, bei welchem die Kavitation durch Ermittlung zumindest einer elektromagnetischen oder einer elektrischen Größe (B, *U, I*) erfasst wird.

2. Verfahren nach Anspruch 1, bei welchem an einem Flügelrad auftretende Kavitation erfasst wird.

3. Verfahren nach Anspruch 2, bei welchem die Kavitation eines Propellers, insbesondere eines Unterseebootpropellers, erfasst wird.

4. Verfahren nach Anspruch 2, bei welchem die Kavitation eines Impellers, insbesondere einer Pumpe, erfasst wird.

5. Verfahren nach Anspruch 4, bei welchem die Kavitation innerhalb eines den Impeller umgebenden Gehäuses erfasst wird.

6. Verfahren nach einem der Ansprüche 2 bis 5, bei welchem die Kavitation stationär zur Drehachse des rotierenden Flügelrad und/oder ortsfest erfasst wird.

7. Verfahren nach einem der vorhergehenden Ansprüche, bei welchem die elektromagnetische Größe (B) eine Feldstärke (B) des elektromagnetischen Feldes und/oder ihr zeitlicher Verlauf ist.

8. Verfahren nach einem der vorhergehenden Ansprüche, bei welchem die elektrische Größe eine Spannung (U) oder ein Strom (I) und/oder ihr zeitlicher Verlauf ist.

9. Verfahren nach einem der vorhergehenden Ansprüche, bei welchem das Vorliegen eines kavitationsabhängigen Anteils (*A₁*, *A₂*, ..., *A₉*) der ermittelten elektromagnetischen Größe geprüft wird.

10. Verfahren nach Anspruch 8, bei welchem der kavitationsabhängige Anteil (*A₁*, *A₂*, ..., *A₉*) zumindest einen Frequenzanteil (*A₁*, *A₂*, ..., *A₉*) der elektromagnetischen Größe (B) oder der elektrischen Größe (U, 1) bildet.

11. Verfahren nach den Ansprüchen 2 und 9 bei welchem der kavitationsabhängige Frequenzanteil (*A₁*, *A₂*, ..., *A₉*) bei der Umlauffrequenz (ω_{c}) des Flügelrades oder einem ganzzahligen Vielfachen dieser Frequenz (2·ω_{c}, 3·ω_{c}, ..., 9·ω_{c}) vorliegt.

12. Verfahren nach einem der vorhergehenden Ansprüche, bei welchem ein niederfrequenter Anteil (As) der erfassten elektromagnetischen Größe vor der Prüfung des Vorliegens des kavitationsabhängigen Anteils ausgefiltert wird.
